# EUROPÄISCHE PATENTANMELDUNG

(11) **EP 0 695 073 A1**
(43) Veröffentlichungstag der Anmeldung: **31.01.1996**
(21) Anmeldenummer: 95810145.3
(22) Anmeldetag: 08.03.1995
(51) Int. Cl.: H04M 1/03

(54) **Telefonapparat**

(30) Priorität: 29.07.1994 EP 94111908
(71) Anmelder: Landis & Gyr Technology Innovation AG, CH-6301 Zug (CH)
(72) Erfinder: Duchoud, Christian, F-74150 Marigny sur Marcel (FR); Brisson, Pascal, F-74150 Rumilly (FR)

(57) **Zusammenfassung**

Ein Telefonhörer (1) oder Telefonhandapparat mit einem aus einem Unterteil (2) und einem Oberteil (3) bestehenden Gehäuse weist gegenseitig einschnappbare Schnappelemente (19, 20) auf, die dem Unterteil (2) bzw. dem Oberteil (3) angeformt sind. Das eine Schnappelement (19) weist eine Öffnung (22) auf, in welche beim Erstellen der Schnappverbindung ein nasenförmiger Ansatz (24) des anderen Schnappelementes (20) einschnappt. Das Gehäuse ist mit einem Füllstoff (14) ausschäumbar. Wenigstens eines der beiden Schnappelemente (19, 20) weist eine Breite von mindestens 5 mm auf, so dass die Kontaktflächen zwischen den Schnappelementen (19, 20) und dem Füllstoff(14) grossflächig sind. Bei einem Schlag auf den Telefonhörer (1) ist die Schnappverbindung (19, 20) nicht mehr lösbar, da der Füllstoff(14) nicht genügend deformierbar ist, um das Lösen des Ansatzes (24) aus der Öffnung (22) zu ermöglichen. Weiter können gegen das Innere des Gehäuses gerichtete Formteile vorgesehen sein, die mit dem Füllstoff(14) eine mechanische, nicht mehr lösbare Verbindung bilden.

## Beschreibung

Die Erfindung betrifft einen Telefonhörer oder Telefonhandapparat der im Oberbegriff des Anspruchs 1 genannten Art.

In der Schweiz sind von den PTT vertriebene Telefone der TRITEL Serie bekannt, deren Hörer ein aus einem Unterteil und einem Oberteil bestehendes Gehäuse aufweist, welche mittels Schrauben zusammengehalten sind.

Aus der EP-A 150 349 ist es bekannt, das Innere eines aus zwei Schalen gebildeten Telefonhörers mit einem Füllstoffauszuschäumen, um eine verbesserte Körperschallentkopplung zwischen der Hörkapsel und der Sprechmuschel zu erreichen. Aus der US 3 564 164 ist es zudem bekannt, den Füllstoff einerseits zur Fixierung der Lage der einzelnen Komponenten des Telefonhörers und andererseits zum Verkleben der beiden Schalen zu benutzen, so dass keine mechanischen Befestigungsvorrichtungen mehr benötigt werden.

Der Erfindung liegt die Aufgabe zugrunde, einen Telefonhörer mit einem aus zwei Schalen gebildeten Gehäuse vorzuschlagen, das eine einfache, schraubenlose Montage erlaubt und auch bei einem Schlag infolge eines vandalischen Aktes nicht auseinanderfällt.

Die genannte Aufgabe wird erfindungsgemäss gelöst durch die Merkmale der Ansprüche 1 und 5.

Nachfolgend werden Ausführungsbeispiele der Erfindung anhand der Zeichnung näher erläutert.

Es zeigen:
- Figur 1: einen Telefonhörer im Längsschnitt,
- Figur 2: einen Telefonhörer mit Schnappelementen im Querschnitt, und
- Figur 3: die Schnappelemente im Längsschnitt.

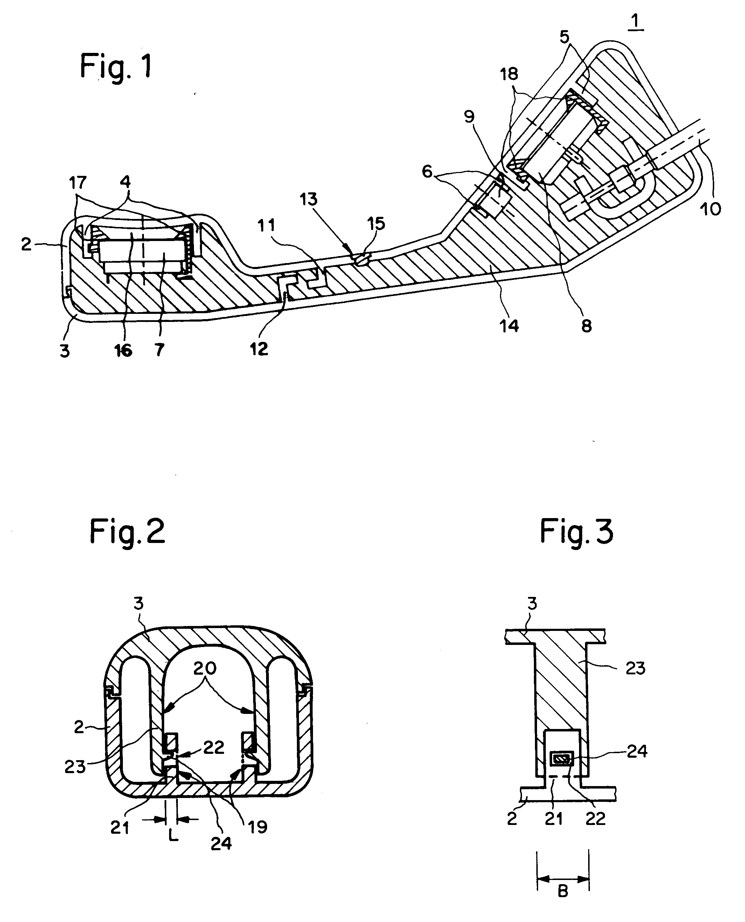

Die Figur 1 zeigt in einer Schnittdarstellung einen ersten Telefonhörer 1, dessen Gehäuse aus einem Unterteil 2 und einem Oberteil 3 besteht, deren Rand so ausgebildet ist, dass das Unterteil 2 und das Oberteil 3 mit leichtem Druck gegenseitig einschnappbar sind. Das Unterteil weist Formteile 4, 5 und 6 auf zur Aufnahme einer Hörkapsel 7, einer Sprechmuschel 8 bzw. fakultativ eines Permanentmagneten 9. Ein Anschlusskabel 10 dient der elektrischen Verbindung des Telefonhörers 1 mit einer nicht gezeichneten Telefonstation. Das Unterteil 2 und das Oberteil 3 weisen mit Vorteil weitere, z.B. L-förmige Formteile 11 und 12 auf, die gegen das Gehäuseinnere gerichtet sind. Im Unterteil 2 befindet sich ein Loch 13, so dass das Innere des Telefonhörers 1 nach erfolgtem Zusammenbau der einzelnen Teile mit einem Füllstoff 14 ausgeschäumt werden kann. Das Loch 13 ist mit einem Zapfen 15 verschliessbar. Das Anschlusskabel 10 kann ein Gummikabel oder ein metallisches Panzerkabel sein.

Der beschriebene Aufbau ermöglicht eine einfache Montage. Die Hörkapsel 7, die Sprechmuschel 8 und der Permanentmagnet 9 werden in die entsprechenden Formteile 4, 5 bzw. 6 lose, vorzugsweise jedoch schnappbar, eingelegt und mit dem Anschlusskabel 10 verdrahtet. Anschliessend wird das Oberteil 3 in das Unterteil 2 eingerastet, das Innere des Telefonhörers 1 durch das als Einfüllstutzen dienende Loch 13 mit dem Füllstoff 14 ausgeschäumt und das Loch 13 mit dem Zapfen 15 verschlossen. Nach der Verfestigung des Füllstoffes 14 bildet der Füllstoff 14 im Zusammenwirken mit den Formteilen 11 und 12 eine mechanische Verzahnung, so dass das Unterteil 2 und das Oberteil 3 unlösbar miteinander verbunden sind. Weiter sind die Hörkapsel 7, die Sprechmuschel 8, der Permanentmagnet 9 und das Anschlusskabel 10 im Inneren des Telefonhörers 1 durch den Füllstoff 14 in ihrer Lage fixiert.

Der Forderung, dass der Füllstoff 14 nicht in den Raum 16 zwischen der Hörkapsel 7 und dem Unterteil 2 gelangt, ist besondere Beachtung zu schenken. Bei einer bevorzugten Ausführung der Erfindung sind deshalb die Hörkapsel 7 wie auch die Sprechmuschel 8 in je ein aus einem weichen Plastik gebildetes Zwischenstück 17 bzw. 18 gesteckt, wobei dann das Zwischenstück 17 bzw. 18 in das Unterteil 2 einlegbar oder einrastbar ist. Die Zwischenstücke 17 und 18 dienen also dazu, die Hörkapsel 7 bzw. die Sprechmuschel 8 dicht im Unterteil 2 so anzubringen, dass ein Eindringen des Füllstoffes 14 in den Raum 16 bzw. den entsprechenden Raum bei der Sprechmuschel 8 wirksam verhindert ist. Eine weiterer Vorteil der Zwischenstücke 17 bzw. 18 besteht darin, dass unterschiedlich grosse Hörkapseln 7 bzw. Sprechmuscheln 8 in ein einziges Unterteil 2 einbaubar sind.

Als Füllstoff 14 eignet sich beispielsweise ein Material wie Polyurethan. Falls der Füllstoff 14 mit dem Unterteil 2 und dem Oberteil 3 verklebt, kann auf Formteile 11 und 12 verzichtet werden. Falls vorhanden, dient der Permanentmagnet 9 als Signalgeber, um festzustellen, ob der Telefonhörer 1 eingehängt ist oder nicht. Es ist auch möglich, das Loch 13 im Oberteil 3 vorzusehen und den Zapfen 15 mit einem Signet für hörbehinderte Personen zu versehen.

Die Formteile 11 und 12 sind aus Gründen der Verständlichkeit L-förmig gezeichnet. Die gleiche Funktion der Formteile 11 und 12 ist auch erreichbar, wenn sie eine etwas andere Geometrie aufweisen, die bei der Herstellung des Unterteils 2 und des Oberteils 3 das Lösen aus den entsprechenden Gussformen gegenüber L-förmigen Formteilen vereinfachen. Ein Beispiel eines solchen Formteiles ist ein Bolzen oder Steg mit einem Loch oder einer Vertiefung, das bzw. die beim Ausschäumen mit dem Füllstoff 14 gefüllt wird.

Die Figur 2 zeigt einen zweiten Telefonhörer 1 mit einander zugeordneten Schnappelementen 19 und 20 im Querschnitt. Die Figur 3 zeigt die Schnappelemente 19 und 20 im Längsschnitt. Das Schnappelement 19 ist dem Unterteil 2, das Schnappelement 20 dem Oberteil 3 angeformt. Die Schnappelemente 19 bzw. 20 sind grossflächig ausgebildet, so dass sie nach dem Ausschäumen mit dem Füllstoff 14 nicht mehr bewegbar sind. Auch bei einem absichtlich geführten Schlag des Telefonhörers 1 gegen einen festen Gegenstand löst sich die durch die Schnappelemente 19 und 20 gebildete Schnappverbindung nicht, da wegen der grossen Kontaktflächen zwischen den Schnappelementen 19 bzw. 20 und dem Füllstoff 14 und der Härte des Füllstoffes 14 der Füllstoff 14 beim Schlag nicht ausreichend deformierbar ist. Der Telefonhörer 1 weist mehrere solcher Schnappverbindungen auf.

Das Schnappelement 19 im Unterteil 2 ist als ein Steg 21 mit einer rechteckförmigen Öffnung 22 ausgebildet. Das Schnappelement 20 im Oberteil 3 ist als ein Steg 23 mit einem nasenförmigen Ansatz 24 ausgebildet, der auf einer Länge L von etwa 1.2 bis 1.5 mm in die Öffnung 22 des Schnappelementes 19 hineinragt. Beim Erstellen und beim Lösen der Schnappverbindung 19, 20 müssen der Ansatz 24 und der Steg 21 auf der Höhe der Öffnung 22 um die Länge L gegeneinander ausgelenkt werden. Ob der Steg 21 oder der Steg 23 beim Erstellen und beim Lösen der Schnappverbindung 19, 20 mehr ausgelenkt wird, hängt von der relativen Länge und der Geometrie der Stege 21 und 23 ab. Die Länge L des Ansatzes 24 ist im Vergleich zur effektiv biegsamen Länge der Stege 21 und 23 so bemessen, dass keiner der Stege 21 und 23 über die Elastizitätsgrenze hinaus beansprucht wird, so dass eine Beschädigung oder Zerstörung der Schnappelemente 19, 20 infolge Überbeanspruchung des Materials ausgeschlossen ist. Die maximal mögliche Länge L des Ansatzes 24 ist deshalb durch die Länge der Stege 21 und 23 vorgegeben. Die Länge der Stege 21 und 23 ihrerseits ist vorgegeben durch die äusseren Abmessungen des Telefonhörers 1 und liegt typisch im Bereich von 10 bis 30 mm. Ihre Breite B ist frei wählbar. Die zum Lösen der Schnappverbindung 19, 20 bei Anwesenheit des Füllstoffes 14 benötigte Kraft nimmt zu mit der Breite B der Stege 21 und 23. Die Stege 21 und 23 weisen deshalb eine Breite B von wenigstens 5 mm, vorzugsweise von mehr als 10 mm auf. Die Stege 21 und 23 müssen diese Breite B vor allem im Bereich der Öffnung 22 aufweisen, wo die Auslenkung beim Erstellen und Lösen der Schnappverbindung am grössten ist. Falls die Konstruktion der Schnappelemente 19 und 20 so ausgelegt ist, dass im wesentlichen nur einer der Stege 21 oder 23 auslenkbar ist, dann genügt es, wenn dieser Steg die oben genannte Mindestbreite B aufweist. Auf diese Weise sind grossflächige Kontaktflächen zwischen den Stegen 21 bzw. 23 und dem Füllstoff 14 gebildet, die in der Grössenordnung von cm liegen. Die für das Lösen der Schnappverbindung 19, 20 benötigte Kraft hängt weiter von den Materialeigenschaften des Füllstoffes 14 ab, der demzufolge über eine vorgegebene Härte verfügen muss.

Bei der Verwendung des zweiten Telefonhörers 1 in Innenräumen kann das Ausschäumen mit dem Füllstoff entfallen, da hier die Gefahr des Vandalismus gering ist. Die Schnappelemente 19 und 20 gewährleisten dann eine dauerhafte Verbindung zwischen dem Unterteil 2 und dem Oberteil 3. Dank den grossflächig ausgebildeten Schnappelementen 19 und 20 ist der aus den gleichen Unter- und Oberteilen 2 bzw. 3 zusammengesetzte Telefonhörer 1 für Innenanwendungen ohne Füllstoff 14, für Aussenanwendungen mit dem Füllstoff 14 herstellbar.

Der Füllstoff 14 macht den Telefonhörer 1 zudem verwindungssteifer, was die Robustheit gegen vandalische Zerstörungsversuche bei Aussenanwendungen erhöht.

Bei einer vorteilhaften Ausführung ist das Unterteil 2 des Telefonhörers 1 mit zwei gegenüber der Kabelrichtung schräg angeordneten integrierten Klemmflügeln zur Halterung des Anschlusskabels 10 ausgebildet, die eine Kabelzugentlastung bilden, wie sie in der CH Patentanmeldung Nr. 924/94-8 beschrieben ist. Das Oberteil 3 weist einen integrierten Stempel auf, der das Anschlusskabel 10 beim Zusammenbau des Unterteils 2 und des Oberteils 3 selbsttätig zwischen die Klemmflügel hineindrückt.

Der Telefonhörer 1 kann auch eine integrierte Wähltastatur mit zugehöriger elektronischer Schaltung aufweisen und als ein vollständiger Telefonhandapparat ausgebildet sein. Bei einem schnurlosen Telefon ist das Anschlusskabel 10 durch eine ausziehbare Antenne ersetzt.

## Patentansprüche

1. Telefonhörer (1) oder Telefonhandapparat mit einem aus einem Unterteil (2) und einem Oberteil (3) bestehenden Gehäuse, **dadurch gekennzeichnet, dass** das Unterteil (2) und das Oberteil (3) gegenseitig einschnappbare Schnappelemente (19, 20) aufweisen, wobei das eine Schnappelement (19) eine Öffnung (22) aufweist, in welche beim Erstellen der Schnappverbindung ein nasenförmiger Ansatz (24) des anderen Schnappelementes (20) einschnappt, und dass wenigstens eines der beiden Schnappelemente (19, 20) eine Breite (B) von wenigstens 5 mm aufweist.

2. Telefonhörer (1) oder Telefonhandapparat nach Anspruch 1, **dadurch gekennzeichnet, dass** wenigstens eines der beiden Schnappelemente (19, 20) eine Breite (B) von wenigstens 10 mm aufweist.

3. Telefonhörer (1) oder Telefonhandapparat nach einem der Ansprüche 1 oder 2, **dadurch gekennzeichnet, dass** die Länge (L) des Ansatzes (24) wenigstens 1.2 mm beträgt.

4. Telefonhörer (1) oder Telefonhandapparat nach einem der Ansprüche 1 bis 3, **dadurch gekennzeichnet, dass** das Gehäuse mit einem Füllstoff(14) ausgeschäumt ist, so dass die Schnappelemente (19, 20) nicht mehr lösbar sind.

5. Telefonhörer (1) oder Telefonhandapparat mit einem aus einem Unterteil (2) und einem Oberteil (3) bestehenden Gehäuse, wobei das Innere des Gehäuses mit einem Füllstoff(14) geschäumt ist, **dadurch gekennzeichnet, dass** das Unterteil (2) und das Oberteil (3) gegen das Innere des Gehäuses mit Formteilen (11, 12) versehen sind, welche mit dem Füllstoff(14) eine mechanische, nicht mehr lösbare Verbindung bilden.

6. Telefonhörer (1) oder Telefonhandapparat nach einem der Ansprüche 1 bis 5, **dadurch gekennzeichnet, dass** der Füllstoff(14) mit dem Unterteil (2) und dem Oberteil (3) verklebt.

7. Telefonhörer (1) oder Telefonhandapparat nach einem der Ansprüche 1 bis 6, **dadurch gekennzeichnet, dass** das Unterteil (2) mit integrierten, zu der durch ein Anschlusskabel (10) definierten Richtung schräg angeordneten Klemmflügeln ausgebildet ist zur Zugsentlastung des Anschlusskabels (10).
